# EUROPÄISCHE PATENTANMELDUNG

(11) **EP 4 070 990 A1**
(43) Veröffentlichungstag der Anmeldung: **12.10.2022**
(21) Anmeldenummer: 22160729.4
(22) Anmeldetag: 08.03.2022
(51) Int. Cl.: B60N 2/90, B60N 2/02

(54) **STEUERUNGSANORDNUNG UND VERFAHREN ZUR DYNAMISCHEN POSITIONSANPASSUNG EINER RECHTEN SEITENWANGE UND EINER LINKEN SEITENWANGE EINES FAHRZEUGSITZES EINES FAHRZEUGS UND FAHRZEUG MIT DER STEUERUNGSANORDNUNG**

(30) Priorität: 06.04.2021 DE 102021203394
(71) Anmelder: PSA Automobiles SA, 78300 Poissy (FR)
(72) Erfinder: KUHLEY, Christian, 65428 Rüsselsheim am Main (DE)
(74) Vertreter: Spitzfaden, Ralf

(57) **Zusammenfassung**

Es wird ein funktional erweitertes Verfahren zur dynamischen Positionsanpassung einer rechten Seitenwange (2) und einer linken Seitenwange (3) eines Fahrzeugsitzes (24) eines Fahrzeugs (4) vorgeschlagen. Im Rahmen des Verfahrens werden Sensordaten (10) des Fahrzeugs (4) erfasst, ausgewertet und daraus Steuerdaten (18) ermittelt, auf Basis derer eine Position der rechten Seitenwange (2) und/oder der linken Seitenwange (3) verändert wird/werden. Die Sensordaten (10) umfassen Längsbeschleunigungskräfte (11) des Fahrzeugs (4). Sie können auch Querbeschleunigungskräfte (12) des Fahrzeugs (4) umfassen.

## Beschreibung

### Technisches Gebiet:

Die Erfindung betrifft ein Verfahren zur dynamischen Positionsanpassung einer rechten Seitenwange und eine linken Seitenwange eines Fahrzeugsitzes eines Fahrzeugs und eine Steuerungsanordnung zur Durchführung des Verfahrens. Die Erfindung betrifft auch ein Fahrzeug mit der Steuerungsanordnung.

### Hintergrund:

Die Positionsveränderung von Seitenpolstern eines Fahrzeugsitzes in Abhängigkeit von einer Fahrbewegung des Fahrzeugs ist aus dem Stand der Technik bereits bekannt. Hierbei können die Fahrbewegungen auf das Fahrzeug einwirkende Querbeschleunigungskräfte umfassen.

Beispielsweise offenbart die Druckschrift WO 97/48571 A1 einen Fahrzeugsitz mit ansteuerbaren positionsveränderlichen Seitenwangen. Bei der Ansteuerung werden Querbeschleunigungen, die Größe des Lenkradeinschlags und/oder die Fahrgeschwindigkeit des Fahrzeugs berücksichtigt.

### Beschreibung:

Der Erfindung liegt die Aufgabe zugrunde, eine funktional erweiterte Steuerungsanordnung und ein funktional erweitertes Verfahren zur dynamischen Positionsanpassung von Seitenwangen eines Fahrzeugsitzes bereitzustellen. Diese Aufgabe wird durch ein Verfahren zur dynamischen Positionsanpassung einer rechten Seitenwange und einer linken Seitenwange eines Fahrzeugsitzes eines Fahrzeugs mit den Merkmalen des Anspruchs 1, durch eine Steuerungsanordnung zur Durchführung des Verfahrens gemäß dem Anspruch 12 und durch ein Fahrzeug mit der Steuerungsanordnung und mit mindestens einem eine rechte und linke Seitenwange umfassenden Fahrzeugsitz gemäß dem Anspruch 15 gelöst. Bevorzugte oder vorteilhafte Ausführungsformen der Erfindung ergeben sich aus den Unteransprüchen, der nachfolgenden Beschreibung und/oder den beigefügten Figuren.

Es wird ein Verfahren zur dynamischen Positionsanpassung einer rechten Seitenwange und einer linken Seitenwange eines Fahrzeugsitzes eines Fahrzeugs, z.B. eines Pkws oder Nutzfahrzeugs, vorgeschlagen. Der Fahrzeugsitz kann ein Sitz einer vorderen Sitzreihe des Fahrzeugs, insbesondere ein Fahrersitz oder Beifahrersitz, oder ein Sitz einer hinteren Sitzreihe des Fahrzeugs sein.

Die Seitenwangen können Bestandteil eines Sitzkissens des Fahrzeugsitzes sein, wobei die Seitenwangen zu beiden Seiten einer Sitzfläche des Sitzkissens angeordnet sind. Alternativ können die Seitenwangen Bestandteil einer Rückenlehne des Fahrzeugsitzes sein, wobei die Seitenwangen zu beiden Seiten einer Anlehnfläche der Rückenlehne angeordnet sind. Im Folgenden wird im Rahmen des Verfahrens nur die Ansteuerung einer rechten und einer linken Seitenwange beschrieben. Es können im Rahmen des Verfahrens jedoch auch mehr als zwei Seitenwangen des Fahrzeugsitzes, z.B. insgesamt vier Seitenwangen, parallel und/oder gleichzeitig angesteuert werden, wobei z.B. zwei der Seitenwangen an dem Sitzkissen und zwei an der Rückenlehne angeordnet sein können.

Im Rahmen des Verfahrens werden Sensordaten des Fahrzeugs erfasst und ausgewertet. Aus den ausgewerteten Sensordaten werden Steuerdaten zur Ansteuerung der rechten Seitenwange und/oder der linken Seitenwange ermittelt.

Die rechte Seitenwange und/oder die linke Seitenwange wird/werden auf Basis der Steuerdaten in ihrer Position angepasst, insbesondere verändert. Beispielsweise kann ein Einfahren zumindest einer der Seitenwangen als Positionsanpassung angesteuert werden, um eine Verschmälerung der Sitzfläche und/oder der Anlehnfläche des Fahrzeugsitzes zu erreichen. Insbesondere kann ein Ausfahren zumindest einer der Seitenwangen als Positionsanpassung angesteuert werden, um eine Verbreiterung der Sitzfläche und/oder der Anlehnfläche des Fahrzeugsitzes zu erreichen. Das Einfahren kann z.B. durch eine Verbreiterung der jeweiligen Seitenwange erfolgen und das Ausfahren durch eine Verschmälerung.

Im Rahmen des Verfahrens ist es vorgesehen, dass die Sensordaten Längsbeschleunigungskräfte des Fahrzeugs umfassen. Diese werden vorzugsweise in einem aktuellen Fahrzeugstand des Fahrzeugs erfasst. Die Längsbeschleunigungskräfte sind bevorzugt in oder entgegen eine x-Richtung gerichtet, wobei die x-Richtung einer Fahrtrichtung des Fahrzeugs entspricht. Die Längsbeschleunigungskräfte umfassen insbesondere eine Beschleunigung und eine Verzögerung einer Fahrzeuggeschwindigkeit. Wenn die Beschleunigung oder die Verzögerung ausgewertet wird, wird vorzugsweise das Einfahren zumindest einer der Seitenwangen angesteuert. Möglich ist es alternativ im Rahmen der Erfindung, dass bei Auswertung der Beschleunigung das Einfahren zumindest einer der Seitenwangen angesteuert wird und dass dagegen bei der Auswertung der Verzögerung das Ausfahren zumindest einer der Seitenwangen angesteuert wird.

Vorteilhaft ist, dass die Position der Seitenwangen dynamisch an eine positive und negative Beschleunigung des Fahrzeugs verändert werden kann. Somit kann eine Weite der Sitzfläche und/oder der Anlehnfläche an die Beschleunigung des Fahrzeugs angepasst werden, sodass der Insasse auf dem Fahrzeugsitz auf der Sitzfläche und/oder an der Anlehnfläche verbessert abgestützt werden kann.

In einem möglichen Verfahrensschritt wird für die rechte Seitenwange und für die linke Seitenwange in Abhängigkeit der Längsbeschleunigungskräfte jeweils ein Positionsveränderungsgrad ermittelt. Der jeweilige Positionsveränderungsgrad entspricht den Steuerdaten und/oder bildet diese.

Im Rahmen des Verfahrens kann es vorgesehen sein, dass der ermittelte Positionsveränderungsgrad jeweils für die rechte Seitenwange und für die linke Seitenwange eine Summe aus einem ersten Summanden und aus einem zweiten Summanden ist. Vorzugsweise entspricht die berechnete Summe den Steuerdaten, auf Basis derer die entsprechende Seitenwange in ihrer Position verändert werden kann.

In einem möglichen Verfahrensschritt werden Sensordaten der rechten Seitenwange und der linken Seitenwange erfasst. Die Sensordaten der rechten Seitenwange umfassen insbesondere eine rechte Ausgangsposition der rechten Seitenwange. Dagegen umfassen die Sensordaten der linken Seitenwange bevorzugt eine linke Ausgangsposition der linken Seitenwange. Die Ausgangspositionen der Seitenwangen sind optional die Positionen, die die Seitenwangen in dem jeweils aktuellen Fahrzustand des Fahrzeugs aufweisen. Sie können Nullstellungen sein, in denen die Seitenwangen vollständig ausgefahren sind und die Sitzfläche so breit wie möglich ist. Die Ausgangspositionen können aber auch Positionen sein, in denen die Seitenwangen ein Stück oder vollständig eingefahren oder aufgrund der Einwirkung von Querbeschleunigungskräften einzufahren sind.

Im Rahmen des Verfahrens kann es vorgesehen sein, dass die erfasste rechte Ausgangsposition den ersten Summanden zur Berechnung der Summe bildet, welche den Steuerdaten entspricht, auf Basis derer die rechte Seitenwange in ihrer Position verändert werden kann. Es kann weiterhin vorgesehen sein, dass die erfasste linke Ausgangsposition den ersten Summanden zur Berechnung der Summe bildet, welche den Steuerdaten entspricht, auf Basis derer die linke Seitenwange in ihrer Position verändert werden kann.

Insbesondere wird der zweite Summand im Rahmen des Verfahrens zu der rechten Ausgangsposition addiert und die Summe berechnet, welche den Steuerdaten zur Ansteuerung der rechten Seitenwange entspricht. Im Speziellen wird der zweite Summand im Rahmen des Verfahrens zu der linken Ausgangsposition addiert und die Summe berechnet, welche den Steuerdaten zur Ansteuerung der linken Seitenwange entspricht. Die Summe definiert bevorzugt eine Zielposition für die rechte Seitenwange und für die linke Seitenwange. Bevorzugt kann die rechte Seitenwange dazu angesteuert werden, ihre Position so zu verändern, dass sie die rechte Zielposition einnimmt. Die linke Seitenwange kann insbesondere dazu angesteuert werden, ihre Position so zu verändern, dass sie die linke Zielposition einnimmt.

In einem möglichen Verfahrensschritt umfassen die Sensordaten Querbeschleunigungskräfte des Fahrzeugs. Die Querbeschleunigungskräfte wirken insbesondere in dem aktuellen Fahrzustand bei einer Kurvenfahrt entlang einer Linkskurve oder Rechtskurve des Fahrzeugs. Die Querbeschleunigungskräfte sind bevorzugt in eine y-Richtung gerichtet, wobei die y- Richtung quer zu der Fahrtrichtung des Fahrzeugs gerichtet ist. Beispielsweise umfassen die Querbeschleunigungskräfte in der Linkskurve bezogen auf die Fahrtrichtung des Fahrzeugs nach rechts gerichtete Querbeschleunigungskräfte und in einer Rechtskurve nach links gerichtete Querbeschleunigungskräfte. Wenn die nach rechts gerichteten Querbeschleunigungskräfte erfasst werden, wird bevorzugt das Einfahren der rechten Seitenwange angesteuert. Dagegen wird vorzugsweise das Einfahren der linken Seitenwange angesteuert, wenn die nach links gerichteten Querkräfte erfasst werden.

Vorteilhaft ist, dass die Position der Seitenwangen dynamisch an die unterschiedlich ausgerichteten Querbeschleunigungskräfte des Fahrzeugs angepasst werden kann. Die Weite der Sitzfläche und/oder der Anlehnfläche kann insbesondere bei der Kurvenfahrt an die Kurvenausrichtung angepasst werden, sodass der Insasse auf der Sitzfläche und/oder an der Anlehnfläche gegen seitliches Verkippen aufgrund von einwirkenden Fliehkräften abgestützt werden kann.

In einem möglichen Verfahrensschritt wird der Positionsveränderungsgrad bei der Erfassung der Querbeschleunigungskräfte immer ausgehend von der Nullstellung als Ausgangsposition der beiden Seitenwangen bestimmt. Vorzugsweise werden die Seitenwangen somit auf Basis des Positionsveränderungsgrads als die Steuerdaten immer von der Nullstellung aus in eine veränderte Position verstellt. Diese veränderte Position entspricht insbesondere der Ausgangsposition, die den ersten Summanden zur Berechnung der Summe bei der Erfassung der Längsbeschleunigungskräfte bildet.

Zusätzlich zu den Längsbeschleunigungskräften und Querbeschleunigungskräften des Fahrzeugs können im Rahmen des Verfahrens zum Beispiel eine Fahrzeuggeschwindigkeit und/oder ein Lenkwinkel des Fahrzeugs in dem aktuellen Fahrzustand als Sensordaten erfasst und ausgewertet werden.

In einem möglichen Verfahrensschritt werden bei einer Vergleichsfahrt des Fahrzeugs Vergleichswerte für die Querbeschleunigungskräfte und für die Längsbeschleunigungskräfte erfasst und/oder definiert. Vorzugsweise werden jedem Vergleichswert genau eine vorzugsweise frei definierbarer rechte Vergleichsposition der rechten Seitenwange und vorzugsweise genau eine frei definierbare linke Vergleichsposition der linken Seitenwange zugeordnet.

In einem optionalen Verfahrensschritt werden die in dem aktuellen Fahrzustand erfassten Querbeschleunigungskräfte mit den Vergleichswerten abgeglichen. Bevorzugt werden im Weiteren die Nullstellungen als die Ausgangspositionen der beiden Seitenwangen mit den jeweils zugeordneten Vergleichspositionen abgeglichen. Insbesondere wird ein Differenzpositionswert für jede Seitenwange ermittelt.

In einem weiteren optionalen Verfahrensschritt werden die in dem aktuellen Fahrzustand erfassten Längsbeschleunigungskräfte mit den Vergleichswerten abgeglichen. Bevorzugt werden im Weiteren die Ausgangspositionen der beiden Seitenwangen mit den jeweils zugeordneten Vergleichspositionen abgeglichen. Insbesondere wird ein weiterer Differenzpositionswert für jede Seitenwange bei dem Abgleich mit den Längsbeschleunigungskräften ermittelt.

Insbesondere ist es im Rahmen des Verfahrens vorgesehen, dass der Positionsveränderungsgrad bei der Erfassung der Querbeschleunigungskräfte für die rechte Seitenwange auf Basis des Differenzpositionswerts für die rechte Seitenwange ermittelt wird und dass der Positionsveränderungsgrad bei der Erfassung der Querbeschleunigungskräfte für die linke Seitenwange auf Basis des Differenzpositionswerts für die linke Seitenwange ermittelt wird. Vorzugsweise entspricht der jeweilige Positionsveränderungsgrad in seinem Betrag dem entsprechenden Differenzpositionswert.

Es kann weiterhin im Rahmen des Verfahrens vorgesehen sein, dass der Positionsveränderungsgrad bei der Erfassung der Längsbeschleunigungskräfte für die rechte Seitenwange auf Basis des weiteren Differenzpositionswerts für die rechte Seitenwange ermittelt wird und dass der Positionsveränderungsgrad bei der Erfassung der Längsbeschleunigungskräfte für die linke Seitenwange auf Basis des weiteren Differenzpositionswerts für die linke Seitenwange ermittelt wird. Vorzugsweise entspricht der jeweilige Positionsveränderungsgrad in seinem Betrag dem entsprechenden weiteren Differenzpositionswert.

Alternativ oder optional ergänzend zu der Berechnung der Summe als die Steuerdaten mittels des Positionsveränderungsgrads ist es im Rahmen des Verfahrens möglich, die rechte Zielposition und die linke Zielposition unmittelbar durch einen Abgleich von Beschleunigungsvektoren und Positionsvektoren zu bestimmen. Vorzugsweise werden die Beschleunigungsvektoren aus den in dem aktuellen Fahrzustand erfassten Querbeschleunigungskräften und Längsbeschleunigungskräften ermittelt. Insbesondere werden die Positionsvektoren der rechten Seitenwange aus den Vergleichspositionen der rechten Seitenwange ermittelt und die Positionsvektoren der linken Seitenwange aus den Vergleichspositionen der linken Seitenwange ermittelt.

In einem möglichen Verfahrensschritt werden Schwellenwerte für die Längsbeschleunigungskräfte und für die Querbeschleunigungskräfte definiert. Vorzugsweise werden die in dem aktuellen Fahrzustand erfassten Längsbeschleunigungskräfte und Querbeschleunigungskräfte mit den entsprechenden Schwellenwerten verglichen. Bevorzugt wird die Positionsanpassung der rechten Seitenwange und der linken Seitenwange nur bei einem Überschreiten der Schwellenwerte angesteuert. Dadurch kann in vorteilhafter Weise eine ungewollte Reaktion der Steuerungsanordnung bei zu geringen Beschleunigungskräften, welche zum Beispiel durch Bewegungen des Insassen bei Fahrzeugstillstand hervorgerufen werden können, vermieden werden.

Einen weiteren Gegenstand der Erfindung bildet eine Steuerungsanordnung zur Durchführung des Verfahrens nach der bisherigen Beschreibung und/oder nach einem der Ansprüche 1 bis 11.

In einer möglichen Ausführungsform der Erfindung umfasst die Steuerungsanordnung eine erste Sensorvorrichtung. Vorzugsweise ist die erste Sensorvorrichtung dazu ausgebildet, die Sensordaten des Fahrzeugs zu erfassen. Beispielsweise umfasst die erste Sensorvorrichtung einen oder mehrere Beschleunigungssensoren zur Erfassung der Längsbeschleunigungskräfte und der Querbeschleunigungskräfte.

Optional ergänzend umfasst die Steuerungsanordnung eine zweite Sensorvorrichtung. Insbesondere ist die zweite Sensorvorrichtung dazu ausgebildet, die Sensordaten der Seitenwangen zu erfassen. Beispielsweise umfasst die zweite Sensorvorrichtung einen oder mehrere Positionssensoren, wobei jeweils mindestens ein Positionssensor der rechten Seitenwange zugeordnet ist und wobei jeweils mindestens ein weiterer Positionssensor der linken Seitenwange zugeordnet ist. Insbesondere erfasst der mindestens eine Positionssensor, der der rechten Seitenwange zugeordnet ist, die Ausgangsposition der rechten Seitenwange, wobei der mindestens eine Positionssensor, der der linken Seitenwange zugeordnet ist, die Ausgangsposition der linken Seitenwange erfasst.

Die Steuerungsanordnung kann weiterhin eine Auswerteeinrichtung umfassen. Beispielsweise ist die Auswerteeinrichtung als ein Rechner mit einer geeigneten Auswertesoftware, insbesondere Firmware, ausgebildet. Bevorzugt ist die Auswerteeinrichtung dazu ausgebildet, die Sensordaten des Fahrzeugs und die Sensordaten der Seitenwangen auszuwerten. Vorzugsweise sind die erste Sensorvorrichtung und die zweite Sensorvorrichtung signaltechnisch mit der Auswerteeinrichtung verbunden, um die Sensordaten des Fahrzeugs und die Sensordaten der Seitenwangen an diese zu übermitteln. Die Sensordaten können zum Beispiel mittels eines Bussystems des Fahrzeugs, zum Beispiel mittels eines sogenannten LIN-BUS Systems, übermittelt werden. Optional ergänzend ist die Auswerteeinrichtung dazu ausgebildet, in Abhängigkeit der ausgewerteten Sensordaten des Fahrzeugs und der Seitenwangen die Steuerdaten zu ermitteln.

In einer weiteren möglichen Ausführungsform der Erfindung umfasst die Steuerungsanordnung mindestens einen Aktor. Beispielsweise kann für jede Seitenwange ein separater Aktor vorgesehen sein. Alternativ ist es auch möglich, dass alle Seitenwangen mittels eines gemeinsamen Aktors in ihrer Position angepasst werden. Möglich ist es auch, dass ein Aktor für die Seitenwangen des Sitzkissens des Fahrzeugsitzes und ein weiterer Aktor für die Seitenwangen der Rückenlehne des Fahrzeugsitzes vorgesehen sind. Der Aktor kann beispielsweise ein Kompressor mit angebundenen Ventilen zur Abgabe von Druckluft sein. Mittels des Kompressors kann durch Ansteuerung der Ventile mindestens eine Kammer oder Blase in der jeweiligen Seitenwange aufgebläht werden, sodass die jeweilige Seitenwange verbreitert und eingefahren wird. Alternativ kann der Aktor eine Motoreinrichtung, zum Beispiel ein Elektromotor, sein, mittels dem eine in den Seitenwangen integrierte Mechanik zur Positionsanpassung aktivierbar ist.

Die Steuerungsanordnung kann weiterhin eine Steuerungseinrichtung umfassen. Die Steuerungseinrichtung ist vorzugsweise zur Ansteuerung des Aktors auf Basis der Steuerdaten ausgebildet. Die Steuerdaten werden hierfür bevorzugt von der Auswerteeinrichtung an die Steuerungseinrichtung übermittelt. Vorzugsweise ist die Steuerungseinrichtung als ein Rechner ausgebildet, in dem eine geeignete Steuerungselektronik und eine geeignete Steuerungssoftware zum Betrieb der Steuerungselektronik installiert ist. Möglich ist es im Rahmen der Erfindung, dass die Steuerungseinrichtung und die Auswerteeinrichtung in einem gemeinsamen Rechner integriert sind. Es ist alternativ möglich, dass die Auswerteeinrichtung signaltechnisch, zum Beispiel mittels des BUS-Systems des Fahrzeugs, mit der Steuerungseinrichtung verbunden ist, sodass die Auswerteeinrichtung die ermittelten Steuerdaten an die Steuerungseinrichtung übermitteln kann. Bevorzugt ist die Steuerungseinrichtung signaltechnisch mit dem/den Aktor/en verbunden.

Die Steuerungsanordnung kann optional eine Deaktivierungseinrichtung umfassen, mittels der die Längsbeschleunigungskräfte nicht zur Ermittlung der Steuerdaten herangezogen werden. In diesem Fall erfolgt die Ermittlung der Steuerdaten nur auf Basis der Querbeschleunigungskräfte und optional ergänzend auf Basis der Fahrzeuggeschwindigkeit und/oder des Lenkwinkels des Fahrzeugs. Die Deaktivierungseinrichtung kann bevorzugt von dem Insassen betätigt werden. Die Möglichkeit, die Steuerdaten auf unterschiedliche Weise zu ermitteln, kann eine veränderte Positionsanpassung der Seitenwangen ermöglichen und somit ein unterschiedliches Fahrgefühl bei dem Insassen hervorrufen.

Einen weiteren Gegenstand der Erfindung bildet ein Fahrzeug, welches insbesondere als ein Pkw oder als ein Nutzfahrzeug ausgebildet sein kann. Das Fahrzeug weist mindestens einen Fahrzeugsitz mit der rechten Seitenwange und mit der linken Seitenwange auf. Das Fahrzeug umfasst die Steuerungsanordnung nach der bisherigen Beschreibung und/oder nach einem der Ansprüche 12 bis 14 zur dynamischen Positionsanpassung der rechten Seitenwange und der linken Seitenwange.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: eine schematische Darstellung einer Steuerungsanordnung zur dynamischen Positionsanpassung einer rechten Seitenwange und einer linken Seitenwange eines Fahrzeugsitzes eines Fahrzeugs;
- Figur 2: der Fahrzeugsitz in einer Draufsicht von vorne mit einem Sitzkissen und mit einer Rückenlehne;
- Figur 3: das Fahrzeug in einer Draufsicht oben;
- Figuren 4a, 4b: das Sitzkissen des Fahrzeugsitzes mit positionsveränderlichen Seitenwangen;
- Figur 5: eine Linkskurve, die das Fahrzeug fahren kann;
- Figur 6: ein Koordinatensystem in dem eine Polsterposition in Abhängigkeit von Querbeschleunigungskräften zur Ermittlung von Steuerdaten aufgetragen ist;
- Figur 7: ein Koordinatensystem, in dem ein Summand in Abhängigkeit von Längsbeschleunigungskräften zur Ermittlung von Steuerdaten aufgetragen ist;

Einander entsprechende oder gleiche Teile sind in den Figuren jeweils mit den gleichen Bezugszeichen versehen.

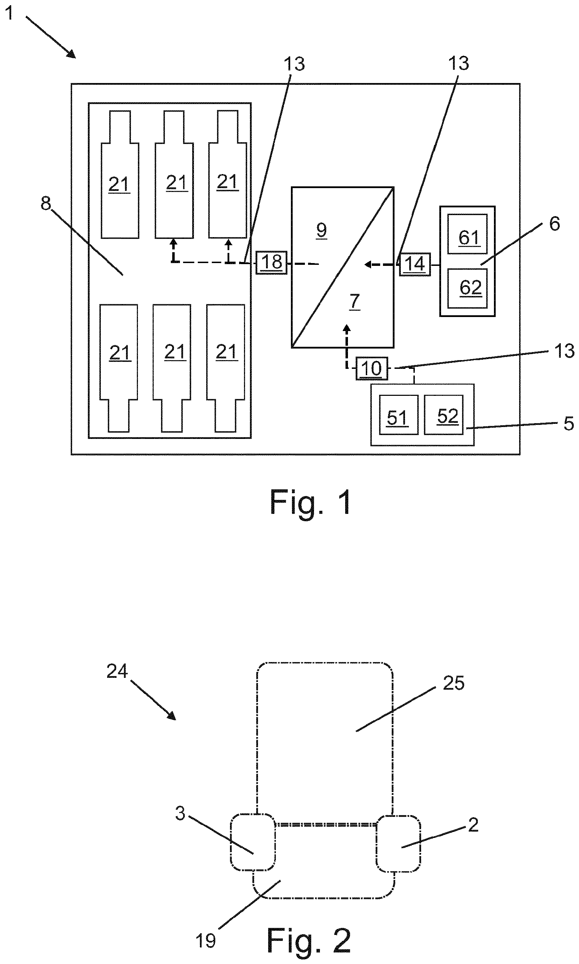

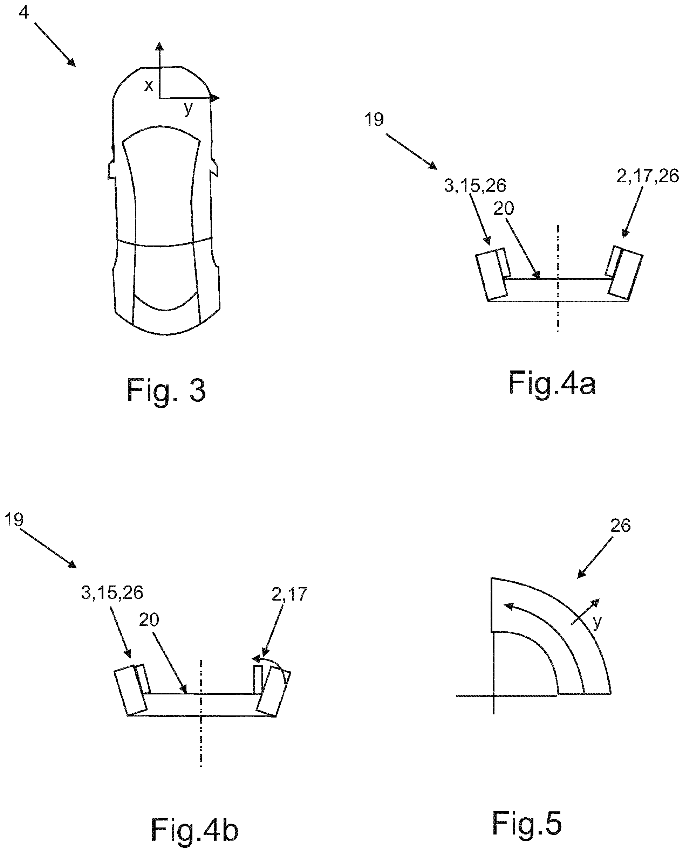

In der Figur 1 ist eine schematische Darstellung einer Steuerungsanordnung 1 gezeigt. Die Steuerungsanordnung 1 ist dazu ausgebildet, eine rechte Seitenwange 2 und eine linke Seitenwange 3 eines Fahrzeugsitzes 24 (Figur 2) eines Fahrzeugs 4 (Figur 3) dynamisch in ihrer Position an einen aktuellen Fahrzustand des Fahrzeugs 4 anzupassen.

Die Steuerungsanordnung 1 eine erste Sensorvorrichtung 5, eine zweite Sensorvorrichtung 6, eine Auswerteeinrichtung 7, mindestens einen Aktor 8 und eine Steuerungseinrichtung 9.

Die erste Sensorvorrichtung 5 umfasst mindestens einen, bevorzugt mehrere Beschleunigungssensoren 51, 52, welche Sensordaten 10 des Fahrzeugs 4 erfassen. Die Sensordaten 10 umfassen Längsbeschleunigungskräfte 11 und Querbeschleunigungskräfte 12.

Die zweite Sensorvorrichtung 6 umfasst mindestens einen, bevorzugt mehrere Positionssensoren 61, 62, welche Sensordaten der Seitenwangen 2, 3 erfassen. Es kann zum Beispiel ein Positionssensor 61 der rechten Seitenwange 2 und ein weitere Positionssensor 62 der linken Seitenwange 3 zugeordnet sein. Die Sensordaten 15 der Seitenwangen 2, 3 umfassen die jeweilige Ausgangsposition 15 der rechten Seitenwange 2 und die Ausgangsposition 17 der linken Seitenwange 3 (siehe Fig. 4a, 4b) in einem aktuellen Fahrzustand des Fahrzeugs 4.

Die Ausgangspositionen 15, 17 der beiden Seitenwangen 2, 3 können wie in den Figuren 4a und 4b gezeigt, unterschiedlich sein. Es kann sich bei den Ausgangspositionen 15, 17 auch um eine Nullstellung 26 zumindest einer der beiden Seitenwangen 2, 3 handeln, wie es insbesondere aus der Figur 4a zu entnehmen ist.

Die Auswerteeinrichtung 7 ist als ein Rechner mit einer geeigneten Auswertesoftware ausgebildet, welcher mit der ersten Sensorvorrichtung 5 und mit der zweiten Sensorvorrichtung 6 signaltechnisch, über einen Datenbus 13, z.B. verbunden ist. Die Sensorvorrichtungen 5, 6 übermitteln die erfassten Sensordaten 10, 14 an die Auswerteeinrichtung 7.

Die Auswerteeinrichtung 7 wertet die Sensordaten 10 des Fahrzeugs 4 aus und ermittelt einen Positionsveränderungsgrad 16, 16' für jede der Seitenwangen 2, 3. Der Positionsveränderungsgrad 16, 16' kann für die rechte Seitenwange 2 unterschiedlich zu der linken Seite 3 sein. Zudem wertet die Auswerteeinrichtung 7 die Sensordaten 14 der beiden Seitenwangen 2, 3 aus und ermittelt daraus eine Ausgangsposition 15 der rechten Seitenwange 2 und eine Ausgangsposition 17 der linken Seitenwange 3 in dem aktuellen Fahrzustand des Fahrzeugs 4.

Auf Basis des Positionsveränderungsgrads 16, 16' und der jeweiligen Ausgangsposition 15, 17 ermittelt die Auswerteeinrichtung 7 Steuerdaten 18 zur Ansteuerung der Positionsveränderung der rechten Seitenwange 2 und der linken Seitenwange 3 mittels des Aktors 8.

Die Steuerungseinrichtung 9 ist als ein Rechner mit einer geeigneten Steuerungselektronik und Steuerungssoftware zum Betrieb der Steuerungselektronik ausgebildet, welcher signaltechnisch, zum Beispiel über den Datenbus 13 des Fahrzeugs 4, mit der Auswerteeinrichtung 7 verbunden ist. Alternativ kann die Steuerungseinrichtung 9 in der Auswerteeinrichtung 7 integriert sein.

Die Auswerteeinrichtung 7 übermittelt die Steuerdaten 18 an die Steuerungseinrichtung 9. Die Steuerungseinrichtung 9 ist signaltechnisch, zum Beispiel über den Datenbus 13, mit dem mindestens einen Aktor 8 verbunden. Sie steuert den mindestens einen Aktor 8 auf Basis der Steuerdaten 18 zur Positionsanpassung der rechten Seitenwange 2 und/oder der linken Seitenwange 3 an.

Die Figur 2 zeigt in schematischer Draufsicht von vorne den Fahrzeugsitz 24 mit einem Sitzkissen 19 und mit einer Rückenlehne 25. Das Sitzkissen 19 umfasst die rechte Seitenwange 2 und die linke Seitenwange 3, welche zu beiden Seiten einer Sitzfläche 20 des Sitzkissens 19 positionsveränderbar angeordnet sind.

Wie in den Figuren 4a und 4b, die das Sitzkissen 19 zeigen, dargestellt, können die Seitenwangen 2, 3 in ihrer Position verändert werden, indem sie verbreitert und eingefahren werden, sodass sich die Sitzfläche 20 verschmälert. In der Figur 4a sind beide Seitenwangen in der Nullstellung 26 angeordnet. In der Figur 4b ist beispielhaft die rechte Seitenwange 2 eingefahren, wogegen die linke Seitenwange 3 die Nullstellung 26 einnimmt. Die Seitenwangen 2, 3 können auch wieder ein Stück oder vollständig verschmälert und ausgefahren werden, sodass sich die Sitzfläche 20 zum Teil oder ganz verbreitert. Es können eine oder beide Seitenwangen 2, 3 in übereinstimmende Positionen verstellt werden. Sie können aber auch unterschiedliche Positionen einnehmen.

In einem alternativen Ausführungsbeispiel ist es möglich, dass die Rückenlehne 25 des Fahrzeugsitzes 24 (siehe Figur 2) zwei weitere Seitenwangen umfasst, welche auf jeder Seite einer Anlehnfläche der Rückenlehne angeordnet sind. Die beiden weiteren Seitenwangen können alternativ oder ergänzend zu den Seitenwangen 2, 3 des Sitzkissens 19 durch die Steuerungseinrichtung 9 in entsprechender Weise in ihren Positionen verändert werden.

In der Figur 3 ist das Fahrzeug 4, insbesondere ein Pkw, in einer Draufsicht von oben gezeigt. Die Längsbeschleunigungskräfte 11 wirken bei einer Beschleunigung des Fahrzeugs 4 in und entgegen einer X-Richtung, welche einer Fahrtrichtung des Fahrzeugs 4 entspricht. Die Querbeschleunigungskräfte 12 wirken bei einer Kurvenfahrt des Fahrzeugs 4 in eine Y-Richtung, welche quer zu der X-Richtung gerichtet ist.

Die Figur 5 zeigt eine Linkskurve 26. Bei der Kurvenfahrt entlang der Linkskurve 26 wirken die Querbeschleunigungskräfte 12 nach rechts, sodass in Folge das rechte Sitzkissen 2, wie in der Figur 4b gezeigt, eingefahren wird. Bei der Kurvenfahrt entlang einer Rechtskurve wirken die Querbeschleunigungskräfte 12 nach links, sodass in Folge das linke Sitzkissen 3 eingefahren wird.

Die Längsbeschleunigungskräfte 11 umfassen eine Beschleunigung und eine Verzögerung des Fahrzeugs 4. Bei der Beschleunigung werden die Seitenwangen 2, 3 ausgefahren, um die Sitzfläche 20 zu verbreitern. Bei der Verzögerung werden die Seitenwangen 2, 3 eingefahren, um die Sitzfläche 20 zu verschmälern.

Ein auf dem Fahrzeugsitz sitzender Insasse kann dadurch bei Einwirkung der Längsbeschleunigungskräfte 11 und der Querbeschleunigungskräfte 12 in den unterschiedlichen Fahrzeugständen des Fahrzeugs 4 vorteilhaft auf der dem Sitzkissen 19 durch die Seitenwangen 2, 3 abgestützt werden und dadurch sicher auf der Sitzfläche 20 gehalten werden.

Der in der Figur 1 gezeigte Aktor 8 ist als ein Kompressor zur Erzeugung von Druckluft mit mehreren durch die Steuereinrichtung 9 ansteuerbaren Ventilen 21 ausgebildet. Mittels der Ventile 21 kann die Druckluft in die Seitenwangen 2, 3 eingelassen werden, um diese zu verbreitern und einzufahren. Die Druckluft kann mittels der Ventile 21 auch wieder aus den Seitenwangen 2, 3 ausgelassen werden, um diese zu verschmälern und auszufahren.

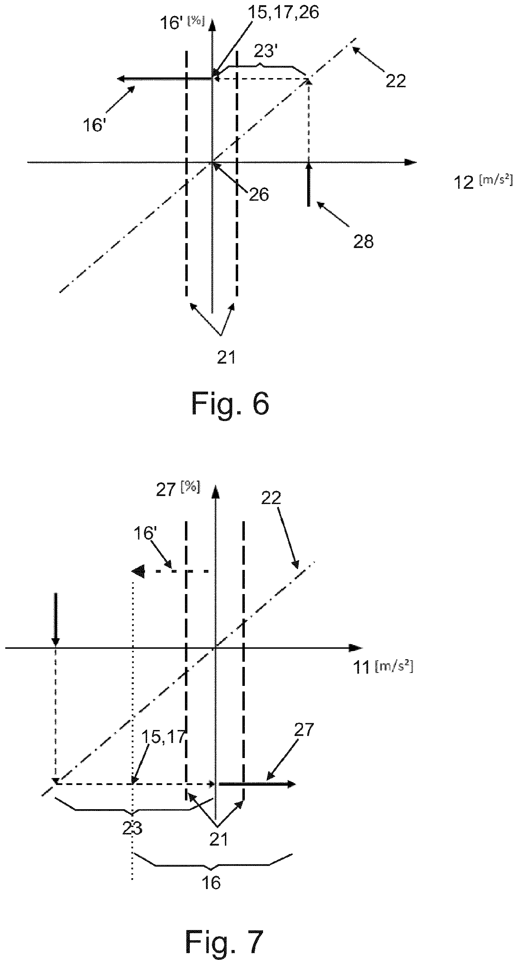

Die Figur 6 zeigt ein Koordinatensystem in dem der Positionsveränderungsgrad 16' in Abhängigkeit der Querbeschleunigungskräfte 12 aufgetragen ist. In der Figur 7 ist ein weiteres Koordinatensystem dargestellt, in dem ein zweiter Summand 27 in Abhängigkeit der Längsbeschleunigungskräfte 11 aufgetragen ist.

Es ist für die Querbeschleunigungskräfte 12 und für die Längsbeschleunigungskräfte 11 ein Schwellenwert 21 bestimmt, der in der Auswerteeinrichtung 7 oder in der Steuerungseinrichtung 9 hinterlegt ist. Die Positionsanpassung der Seitenwangen 2, 3 erfolgt erst dann, wenn die erfassten Querbeschleunigungskräfte 12 gemäß der Figur 6 über diesem Schwellenwert 21 liegen beziehungsweise wenn die erfassten Längsbeschleunigungskräfte 11, wie in der Figur 7 gezeigt, über diesem Schwellenwert 21 liegen. Dadurch kann es vermieden werden, dass eine Positionsanpassung der Seitenwangen 2, 3 bei nur geringen Beschleunigungen angesteuert wird.

Zur Ermittlung der Steuerdaten 18 werden zunächst bei einer Vergleichsfahrt des Fahrzeugs 4 Vergleichswerte für die Querbeschleunigungskräfte 12 gemäß der Figur 6 und für die Längsbeschleunigungskräfte 11 gemäß der Figur 7 definiert, welche in einer Vergleichskurve 22 angetragen sind. Jedem Vergleichswert wird genau eine Vergleichsposition der rechten Seitenwange 2 und der linken Seitenwange 3 zugeordnet.

Die in dem aktuellen Fahrzustand des Fahrzeugs 4 erfassten Querbeschleunigungskräfte 12 und Längsbeschleunigungskräfte 11 werden mit den Vergleichswerten in der Vergleichskurve 22 abgeglichen. Die sich aus der Vergleichskurve 22 der Figur 6 ergebenden Vergleichspositionen für die Querbeschleunigungskräfte 12 und die sich aus der Vergleichskurve 22 der Figur 7 ergebenden Vergleichspositionen werden mit den jeweiligen Ausgangspositionen 15, 17 der Seitenwangen 2, 3 abgeglichen.

Die Ausgangspositionen 15, 17 bei den erfassten Querbeschleunigungskräften 12 gemäß der Figur 6 sind die Nullstellungen 26 der Seitenwangen 2, 3. Dagegen sind die Ausgangspositionen 15, 17 bei den erfassten Längsbeschleunigungskräften 11 die gegenüber der Nullstellung 26 veränderten Positionen, welche die Seitenwangen 2, 3 dann einnehmen, wenn sie zuvor in Abhängigkeit der Querbeschleunigungskräfte 12 verstellt wurden. Wenn die Seitenwangen 2, 3 nicht bereits verstellt wurden, z. B. weil keine Querbeschleunigungskräfte 12 erfasst wurden, können die Ausgangspositionen 17 in diesem Fall auch den Nullstellungen 26 entsprechen.

Durch den Abgleich der Ausgangspositionen 15, 17, 26 mit den jeweiligen Vergleichspositionen wird für die Querbeschleunigungskräfte 11 ein Differenzpositionswert 23' und für die Längsbeschleunigungskräfte 12 ein Differenzpositionswert 23 jeweils für die rechte Seitenwange 2 und für die linke Seitenwange 3 ermittelt. Der jeweilige Positionsveränderungsgrad 16, 16' für die rechte Seitenwange 2 und für die linke Seitenwange 3 wird danach auf Basis des entsprechenden Differenzpositionswerts 23, 23' ermittelt.

Der Differenzpositionswert 23, 23' entspricht betragsmäßig dem Positionsveränderungsgrad 16, 16'. Bei den erfassten Längsbeschleunigungskräften 11 gemäß der Figur 7 ist der Positionsveränderungsgrad 16 eine Summe, welche aus einem ersten Summanden und dem zweiten Summanden 27 gebildet ist. Der erste Summand entspricht der Ausgangsposition 15, 17 der jeweiligen Seitenwange 2, 3.

Zur Ermittlung der Steuerdaten 18 wird der zweite Summand 27 zu der Ausgangsposition 15, 17 der entsprechenden Seitenwange 2, 3 addiert. Insbesondere bilden der zweite Summand 27 und die Ausgangsposition 17 Summanden der Summe, welche die Steuerdaten 18 bildet.

Während ein Ausführungsbeispiel detailliert offenbart wurde, ist es anzuerkennen, dass eine Vielzahl von erfindungsgemäßen Variationen existieren. Es ist ebenfalls anzuerkennen, dass das mindestens eine Ausführungsbeispiel nur beispielhaften Charakter hat und keine Begrenzung des Schutzumfangs, der Anwendungsgebiete oder der Konfiguration darstellt. Vielmehr soll die vorliegende Offenbarung einen angenehmen Fahrplan zur Umsetzung mindestens eines Ausführungsbeispiels sein. Somit sollte es anzuerkennen sein, dass verschiedene Variationen der Funktion oder der Anordnung der Elemente des mindestens einen Ausführungsbeispiels umgesetzt werden können, ohne den Umfang zu verlassen, der durch die Ansprüche und deren rechtmäßigen Äquivalente vorgegeben ist.

### Bezugszeichenliste:

- 1: Steuerungsanordnung
- 2: rechte Seitenwange
- 3: linke Seitenwange
- 4: Fahrzeug
- 5: Erste Sensorvorrichtung
- 6: Zweite Sensorvorrichtung
- 7: Auswerteeinrichtung
- 8: Aktor
- 9: Steuerungseinrichtung
- 10: Sensordaten des Fahrzeugs
- 11: Längsbeschleunigungskräfte
- 12: Querbeschleunigungskräfte
- 13: Datenbus
- 14: Sensordaten der Seitenwangen
- 15: Ausgangsposition rechte Seitenwange
- 16: Positionsveränderungsgrad
- 17: Ausgangsposition linke Seitenwange
- 18: Steuerdaten
- 19: Sitzkissen
- 20: Sitzfläche
- 21: Schwellenwert
- 22: Vergleichskurve
- 23: Differenzpositionswert
- 24: Fahrzeugsitz
- 25: Rückenlehne
- 26: Nullstellung
- 27: Zweiter Summand
- 28: y-Wert
- 51: Beschleunigungssensor
- 52: weiterer Beschleunigungssensor
- 61: Positionssensor
- 62: weiterer Beschleunigungssensor

## Patentansprüche

1. Verfahren zur dynamischen Positionsanpassung einer rechten Seitenwange (2) und einer linken Seitenwange (3) eines Fahrzeugsitzes (24) eines Fahrzeugs (4),
wobei Sensordaten (10) des Fahrzeugs (4) erfasst werden,
wobei die erfassten Sensordaten (10) ausgewertet werden und daraus Steuerdaten (18) ermittelt werden,
wobei die rechte Seitenwange (2) und/oder die linke Seitenwange (3) auf Basis der Steuerdaten (18) in ihrer Position verändert wird/werden,
wobei die Sensordaten (10) Längsbeschleunigungskräfte (11) des Fahrzeugs (4) umfassen.

2. Verfahren nach Anspruch 1, **dadurch gekennzeichnet, dass** als Steuerdaten (18) jeweils ein Positionsveränderungsgrad (16) für die rechte Seitenwange (2) und für die linke Seitenwange (3) in Abhängigkeit der Längsbeschleunigungskräfte (11) ermittelt wird, wobei der jeweiligen Positionsveränderungsgrad (16) eine Summe aus einem ersten Summanden und einem zweiten Summanden (27) ist.

3. Verfahren nach Anspruch 1 oder 2, **dadurch gekennzeichnet, dass** Sensordaten (14) der rechten Seitenwange (2) und der linken Seitenwange (3) erfasst werden, wobei die Sensordaten (14) eine jeweilige Ausgangsposition (15, 17) der entsprechenden Seitenwange (2,3) umfasst.

4. Verfahren nach Anspruch 2 oder 3, **dadurch gekennzeichnet, dass** die jeweilige Ausgangsposition (15, 17) den ersten Summanden zur Berechnung der Steuerdaten (18) als die Summe bildet.

5. Verfahren nach einem der vorhergehenden Ansprüche, **dadurch gekennzeichnet, dass** die Sensordaten (10) Querbeschleunigungskräfte (12) des Fahrzeugs (4) umfassen.

6. Verfahren nach Anspruch 5, **dadurch gekennzeichnet, dass** der jeweilige Positionsveränderungsgrad (16') bei der Erfassung der Querbeschleunigungskräfte (12) immer ausgehend von einer Nullstellung (26) der rechten und linken Seitenwange (2, 3) bestimmt wird, wobei die Seitenwangen (2, 3) auf Basis des entsprechenden Positionsveränderungsgrads (16') als die Steuerdaten (18) immer von der Nullstellung (26) aus in eine veränderte Position gebracht werden, wobei die veränderte Position der Ausgangposition (15, 17) und/oder dem ersten Summanden zur Berechnung der Summe bei der Erfassung der Längsbeschleunigungskräfte (11) entspricht.

7. Verfahren nach Anspruch 6, **dadurch gekennzeichnet, dass** bei einer Vergleichsfahrt des Fahrzeugs (4) Vergleichswerte für die Querbeschleunigungskräfte (12) und für die Längsbeschleunigungskräfte (11) erfasst werden, wobei jedem Vergleichswert genau eine Vergleichsposition der rechten Seitenwange (2) und der linken Seitenwange (3) zugeordnet werden.

8. Verfahren nach Anspruch 7, **dadurch gekennzeichnet, dass** die erfassten Querbeschleunigungskräfte (12) mit den Vergleichswerten abgeglichen werden und dass die jeweilige Nullstellung (26) als Ausgangsposition (15, 17) der rechten und linken Seitenwange (2, 3) mit den jeweils zugeordneten Vergleichspositionen abgeglichen werden und ein entsprechender Differenzpositionswert (23') für jede Seitenwange (2, 3) ermittelt wird und/oder dass die erfassten Längsbeschleunigungskräfte (11) mit den Vergleichswerten abgeglichen werden und dass die Ausgangsposition (15, 17) der rechten und linken Seitenwange (2, 3) mit den jeweils zugeordneten Vergleichspositionen abgeglichen werden und ein entsprechender weiterer Differenzpositionswert (23) für jede Seitenwange (2, 3) ermittelt wird.

9. Verfahren nach Anspruch 8, **dadurch gekennzeichnet, dass** der Positionsveränderungsgrad (16, 16') dem Differenzpositionswert (23, 23') betragsmäßig entspricht.

10. Verfahren nach einem der Ansprüche 5 bis 9, **dadurch gekennzeichnet, dass** aus den erfassten Querbeschleunigungskräften (12) und Längsbeschleunigungskräften (11) Beschleunigungsvektoren ermittelt werden und dass aus den Vergleichspositionen der rechten und linken Seitenwange (2,3) entsprechende Positionsvektoren ermittelt werden, wobei Zielpositionen der rechten und linken Seitenwange (2,3) unmittelbar durch einen Abgleich der Beschleunigungsvektoren und der entsprechenden Positionsvektoren bestimmt werden.

11. Verfahren nach einem der vorhergehenden Ansprüche, **dadurch gekennzeichnet, dass** Schwellenwerte (21) für die Längsbeschleunigungskräfte (11) und für die Querbeschleunigungskräfte (12) definiert werden, wobei die erfassten Längsbeschleunigungskräfte (11) und Querbeschleunigungskräfte (12) mit den entsprechenden Schwellenwerten (21) verglichen werden und wobei die Positionsanpassung der linken Seitenwange (3) und der rechten Seitenwange (2) nur bei einem Überschreiten der Schwellenwerte (21) angesteuert wird.

12. Steuerungsanordnung (1) zur Durchführung des Verfahrens nach einem der vorhergehenden Ansprüche.

13. Steuerungsanordnung (1) nach Anspruch 12, **dadurch gekennzeichnet, dass** die Steuerungsanordnung (1) eine erste Sensorvorrichtung (5) umfasst, welche zur Erfassung der Sensordaten (10) des Fahrzeugs (4) ausgebildet ist, dass die Steuerungsanordnung (1) eine zweite Sensorvorrichtung (6) umfasst, welche zur Erfassung der Sensordaten (14) der Seitenwangen (2,3) ausgebildet ist und dass die Steuerungsanordnung (1) eine Auswerteeinrichtung (7) umfasst, welche zur Auswertung der Sensordaten (10) des Fahrzeugs (4) und der Sensordaten (14) der Seitenwangen (2,3) ausgebildet ist, wobei Auswerteeinrichtung (7) zur Ermittlung der Steuerdaten (18) auf Basis der Sensordaten (10) des Fahrzeugs (4) und der Seitenwangen (14) ausgebildet ist.

14. Steuerungsanordnung (1) nach Anspruch 13 **dadurch gekennzeichnet, dass** die Steuerungsanordnung (1) mindestens einen Aktor (8) umfasst, welcher zur Positionsanpassung der rechten Seitenwange (2) und der linken Seitenwange (3) ausgebildet ist und dass die Steuerungsanordnung (1) eine Steuerungseinrichtung (9) umfasst, welche zur Ansteuerung des Aktors (8) auf Basis der Steuerdaten (14) ausgebildet ist.

15. Fahrzeug (4) mit mindestens einem Fahrzeugsitz (24), wobei der Fahrzeugsitz (24) eine rechte Seitenwange (2) und eine linke Seitenwange (3) aufweist, **dadurch gekennzeichnet, dass** das Fahrzeug (4) die Steuerungsanordnung (1) nach einem der Ansprüche 12 bis 14 zur dynamischen Positionsanpassung der rechten Seitenwange (2) und der linken Seitenwange (3) umfasst.
